# EUROPEAN PATENT APPLICATION

(11) **EP 4 807 649 A1**
(43) Date of publication of application: **16.09.2026**
(21) Application number: 25425010.3
(22) Date of filing: 12.03.2025
(51) Int. Cl.: G06Q 20/06, G06Q 20/22, G06Q 20/36, G06Q 20/38, G06Q 20/40

(54) **IMPROVED PAYMENT SYSTEM**

(71) Applicant: Quasar S.r.l., 20121 Milano (IT)
(72) Inventor: VALENTE, Massimiliano, 56035 Lari Perignano (IT)
(74) Representative: Botti & Ferrari S.p.A.

(57) **Abstract**

A system for making payments is described, the system having at least one processing unit configured to recognize payment information related to a user who uses a service with which an amount to be paid is associated, said amount comprising at least one first amount and one second amount in a fiat currency, define at least first data related to the first amount and second data related to the second amount, separate the first data from the second data so as to divide the amount into said first amount and said second amount, convert the fiat currency of the first amount and the second amount into cryptocurrency; transfer the first amount and the second amount converted into cryptocurrency to a wallet associated with a blockchain network, convert the cryptocurrency in said wallet back into fiat currency, and transfer the converted currency, through a first data flow related to the payment of the first amount, to a first account, and, through a second data flow related to the payment of the second amount, to a second account which is different from the first account. A related method is also described.

## Description

### Field of application

The present invention refers to a system and a related method for making payments, for example (but not limited to) payments which also provide the payment of a related tax or payments to different providers, and the following description refers to this field of application with the sole purpose of simplifying the exposition thereof.

### Prior art

As well known, the payment of a specific service by a user is often associated with a specific tax defined by specific administrations, such as municipalities or other institutions.

For example, in the hotel sector, there is the so-called tourist tax, which is a local tax applied to users of accommodation facilities located in territories classified as tourist locations or art cities. The collection of the tourist tax causes several problems for hoteliers, who now have to perform several tasks, which is the reason why there is a need for an automated system which can perform this task.

More generally, in the area of payments, including the area of the digital electronic payments, there are many situations in which an amount to be paid comprises different portions destined to different subjects, and it is therefore desirable to automate the payment process for all these situations, facilitating the operation for both the user and the commercial activity.

It can also be noted that, in this sector, when implementing new systems and new payment methods, there is often difficulty in interfacing with payment circuits and traditional channels, for example with the need to rely on bank acquirers, which is why it is desirable to simplify the implementation of the system and in general of the entire payment process.

The technical problem underlying of the present invention is to devise a system, and a related method, which has structural and functional features so as to overcome the limitations and drawbacks complained in relation to the prior art, in particular which allows an easy payment of different amounts at the same time, with an improved service for both the user and the operator.

### Summary of the invention

The solution idea underlying the present invention is to make the payment of a specific service through an electronic payment system specifically developed and programmed to divide the payment made by the user, for example into a part related to the offered service and into another part related to the tax associated therewith (or in general into different amounts to different subjects). The payment system is therefore programmed and configured to automatically separate the various amounts, even in the case of multiple orders, starting from a single transaction for the user and sending separate payment flows to different respective accounts. In particular, once the payment splitting has been performed, the fiat currency with which the transaction by the card of the user was initially started is converted into a cryptocurrency managed through blockchain with which the system is programmed to interface, in particular said currency is transferred to an electronic wallet associated with the various accounts, with subsequent direct transfer from said wallet to the respective accounts again in fiat currency, obtaining a simple and extremely efficient system.

It is also possible to use an AI agent to allow the input of the user in an extremely simplified manner, so that, following said input, the transaction data and the split payment can be automatically managed (for example, through a simple voice command).

Based on said solution idea, the aforementioned technical problem is solved by a system for making payments, comprising at least one processing unit provided with the following hardware/software modules/means in operational communication with each other:
- means configured to recognize payment information related to a user who uses a service with which an amount to be paid is associated (for example with a payment based on a card of the user), said amount comprising at least one first amount and one second amount in a fiat currency;
- means configured to define at least first data related to the first amount and second data related to the second amount (which can also correspond to the aforementioned means);
- a splitting engine configured to automatically separate the first data from the second data so as to divide the amount into said first amount and said second amount,
- an intermediate unit, such as for example, but not necessarily, a processing server, which in turn comprises a conversion module configured to convert the fiat currency of the first amount and the second amount into cryptocurrency and a blockchain module configured to transfer the first amount and the second amount converted into cryptocurrency to a respective wallet associated with a blockchain network ((which can also be understood as part of the system or in any case as a network with which the system interfaces through said blockchain module), convert, through the aforementioned conversion module, the cryptocurrency in said wallet back into fiat currency, and transfer, by said intermediate unit, the converted currency, through a first data flow related to the payment of the first amount, to a first account, and, through a second data flow related to the payment of the second amount separately from the first data flow, to a second account which is different from the first account. As mentioned above, all of the above modules can be considered as being part of the processing unit C, which will be described in the following description as representative of all the aforementioned modules and will be configured to perform the aforementioned functions.

More in particular, the invention comprises the following additional and optional features, taken individually or in combination, if necessary. Said additional and optional features are illustrated for example in the dependent claims.

According to an aspect of the present invention, the cryptocurrency can be a stablecoin.

According to an aspect of the present invention, the processing unit can be configured to interface with the blockchain network, which is structured to manage the cryptocurrency into which the fiat currency of the first amount and the second amount has been converted.

According to an aspect of the present invention, a structured code for executing a smart contract can be associated with the blockchain network.

According to an aspect of the present invention, the processing unit can be configured to transfer the converted currency of the first amount and the second amount through direct transfer from the wallet to the first account and the second account.

According to an aspect of the present invention, the processing unit can be configured to automatically perform a tax reporting.

According to an aspect of the present invention, the processing unit can comprise an artificial intelligence engine programmed to transform inputs of a user into instructions which are automatically executable by said processing unit for making payments to the first account and the second account.

According to an aspect of the present invention, the artificial intelligence engine can be an AI agent.

According to an aspect of the present invention, the input of the user can be a voice command.

According to an aspect of the present invention, the artificial intelligence engine can be trained to perform at least one of:
- optimizing currency transfers and data flows in real time; and/or
- monitoring said currency transfers and said data flows and, based on said monitoring, identifying anomalous or potentially fraudulent behaviors.

According to an aspect of the present invention, the processing unit can comprise instructions adapted to generate a user interface configured to allow the user to access and interact with a platform generated through said system.

According to an aspect of the present invention, said platform can be configured to perform multiple bookings.

According to an aspect of the present invention, the processing unit can be further configured to allow the separation of the first amount from the second amount for each booking made by the user through said platform.

According to an aspect of the present invention, if a booking involves different providers of a service, the processing unit can be configured to flexibly divide the total amount into a plurality of amounts, each of said amounts being related to a specific provider among said different providers, automatically transferring, through a single transaction made by the user, the different split amounts to separate accounts of the respective providers, thus managing multiple payments at the same time.

According to an aspect of the present invention, the processing unit can be configured to suggest customized offers or multi-activity packages based on historical user data and/or preferences of said user.

According to an aspect of the present invention, the processing unit can also comprise a POS terminal or a local unit at a commercial establishment, in turn including reading means for payment means of a user. According to an aspect of the present invention, said POS terminal or said local unit (C1) can be configured to start a transaction when said reading means recognize the payment means of the user

According to an aspect of the present invention, the system of the present invention can comprise a remote unit in operational communication with the POS unit/local unit. According to an aspect of the present invention, said remote unit can be configured to perform the separation of the first amount from the second amount and the conversion into cryptocurrency. Said remote unit can furthermore be configured to interact with the blockchain network for transferring the amounts and managing the wallet.

According to another aspect of the present invention, the processing unit can comprise at least one remote unit, for example a centralized cloud unit, which comprises instructions which, when executed, allow generating a platform which is accessible by a specific application or through a specific internet address from a user device. According to an aspect of the present invention, said platform can comprise a user interface through which the user device is able to interact and make online electronic payments.

According to an aspect of the present invention, the processing unit can comprise in memory a plurality of Application programing Interfaces configured to be called and executed by said processing unit for the execution of its functions, for example Alchemy or Infura for the connection with the blockchain network.

According to an aspect of the present invention, the wallet can be managed through MetaMask.

According to an aspect of the present invention, the blockchain network can be an Ethereum network.

The present invention also refers to a method for making payments, comprising the steps of:
- recognizing payment information related to a user who uses a service with which an amount to be paid is associated, said amount comprising at least one first amount and one second amount in a fiat currency (and therefore a payment through a card of the user);
- defining at least first data related to the first amount and second data related to the second amount;
- automatically separating the first data from the second data so as to divide the amount into said first amount and said second amount;
- converting the fiat currency of the first amount and the second amount into cryptocurrency;
- transferring the first amount and the second amount converted into cryptocurrency to a respective wallet associated with a blockchain network;
- converting the cryptocurrency in said wallet back into fiat currency;
- transferring the converted currency, through a first data flow related to the payment of the first amount, to a first account; and
- transferring the converted currency, through a second data flow related to the payment of the second amount separately from the first data flow, to a second account which is different from the first account.

According to an aspect, the cryptocurrency can be a stablecoin.

According to an aspect, portions of code of a smart contract can be associated with the blockchain network.

According to an aspect, the transfer of the converted currency of the first amount and the second amount can occur through direct transfer from the wallet to the first account and the second account.

The features and advantages of the system and method according to the invention will be apparent from the description, given herein below, of an embodiment example thereof, given by way of indicative and non-limiting example with reference to the attached drawings.

### Brief description of the drawings

In the drawings:
- Figure 1 shows a diagram of a system according to the present invention;
- Figure 2 shows a diagram of the system according to an embodiment of the present invention;
- Figure 3 shows a diagram of the system according to an embodiment of the present invention; and
- Figure 4 shows a scheme of a platform implemented by the system of the present invention.

### Detailed description

With reference to these figures, 10 globally and schematically indicates a system for making payments according to the present invention, said system 10 performing a corresponding method.

It should be noted that the figures represent schematic views and are not drawn to scale, but they are instead drawn so as to emphasize important features of the invention. Furthermore, in the figures, the various elements are represented in a schematic way, their shape can vary depending on the desired application. It should also be noted that, in the figures, identical reference numbers refer to elements which are identical in shape or function. Finally, particular features described in relation to an embodiment illustrated in a figure can also be used for the other embodiments illustrated in the other figures.

It should also be noted that, when sequences of process steps are illustrated, they do not necessarily follow the indicated sequence, said steps being, in some cases, inverted.

In general, the payment system 10 (for the sake of simplicity hereinafter only referred to as "system 10") of the present invention finds application in various commercial sectors, such as for example, but not limited to, the hotel sector. In this regard, it should be noted that the present invention will also be illustrated in relation to an example of application in which the commercial establishment is a hotel and the related tax to be paid is the tourist tax, but the present invention is not to be understood as limited to this specific illustrated application and many other applications of the system 10 are possible.

As will be explained in detail in the following description, the system 10 of the present invention allows to solve the problems complained in relation to the prior art, that is substantially at the moment of the payment of a user. It is again restated that the present description refers only to some specific examples and is provided in order to present, through said practical examples, the important and distinctive aspects of the present invention, without necessarily being limited to said specific applications.

It should also be noted that some elements known in the payment sector (such as, for example, the role of the acquirers in the execution of the payment, as well as the operation of the reconciliation engines and the like), as well as some aspects of the cryptocurrency area, will not be illustrated in detail so as not to unnecessarily complicate the description.

Furthermore, in the context of the present invention, the term "user" is used to indicate the subject who uses and pays for a specific service while the term "operator" is used to indicate the subject who provides said specific service (for example the hotelier). In some examples, the term "user" can also in general refer to the user of the system 10, without limiting the scope of the present invention.

That being said, firstly, the main elements of the system 10 of the present invention will be illustrated below.

### General description of the payment system

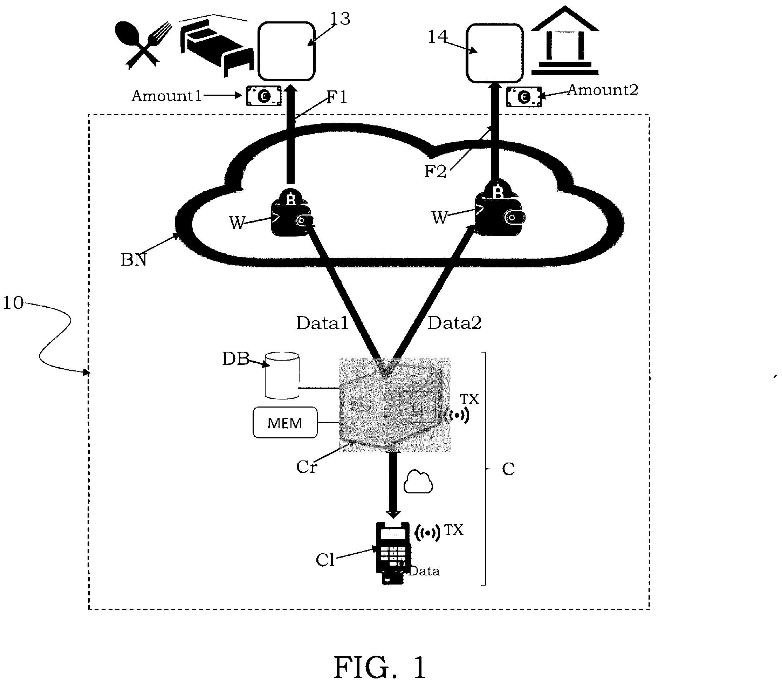

As illustrated in figure 1, the system 10 comprises a processing unit (indicated globally and generically with the reference C), which represents the main core of the invention and is able to perform steps of one or more programs specifically developed to work therewith.

It should be noted that, in the context of this description, the term "processing unit" is to be understood in a broad sense and can represent any electronic system which is able to allow a user to pay for a specific service. As will be illustrated in detail below, this electronic processing unit C is controlled by one or more suitable applications which are specifically developed and comprise portions of code which, when executed thereby, allow the system 10 to operate in an innovative manner. In various embodiments, the processing unit C can comprise a set of components, such as local units and possibly remote units in operational communication with each other.

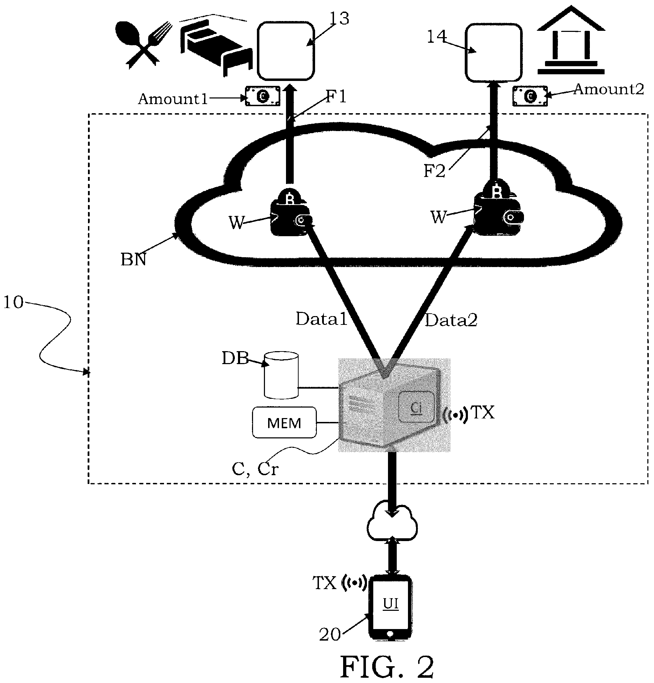

As will be detailed below, the processing unit C can comprise a POS terminal, more specifically its processor (or even a smartphone/tablet and/or devices associated therewith), at a commercial establishment (and it can therefore be a local unit) and at the same time one or more remote units, such as for example server units (for example managed by specific institutes) in operational communication with the POS terminal (or more generally with the local unit), as illustrated in figure 1, both said components being programmed to operate in a synergic and innovative way, as well as, in other embodiments, it can comprise only one or more remote units specifically programmed to manage the system 10 and to operate in an innovative manner as described below, in particular in the case of online digital electronic payments (as in figure 2).

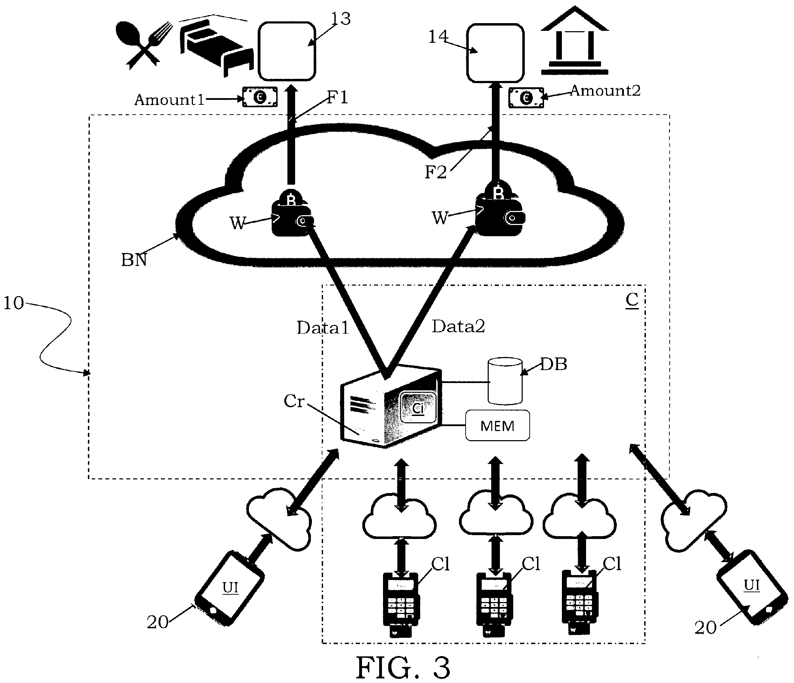

Combined embodiments are also possible (as in figure 3) in which the system 10 is a distributed system comprising local units, such as POS terminals at various commercial establishments, and one or more remote units configured to also allow, in addition to the general management of the system, online electronic payments, for example through apps installed on user devices such as smartphones and tablets, and therefore various processing units, with possibly a unit (for example a cloud unit) specifically dedicated to a centralized management of the system and managed by specific structures.

The processing unit C is configured to recognize payment information related to a user who uses a service of a commercial establishment associated with an amount to be paid, and it is then programmed to allow a (digital or physical) payment through a card of the user.

As will be detailed below, the amount to be paid comprises at least one first amount (indicated as "Amount1", for example related to the service purchased by the user) and one second amount (indicated as "Amount2", for example, but not limited to, a tax associated with the service). These amounts are initially in the form of a fiat currency (such as for example in Euros) and the operator initially accepts the card of the user to make a transaction in said fiat currency.

The processing unit C is therefore able to identify a payment card of a user to allow the payment of the amount associated with an expense of the user. It should be noted that the step of recognition of the card of the user is to be understood in a broad sense and can occur in various ways. For example, it can occur through a POS terminal (or in general any computerized unit such as a smartphone or tablet or devices associated therewith) comprising reading means of the payment card of the user, wherein said POS terminal is configured to start the transaction when the reading means recognize the payment card. In other embodiments, it can be provided that the user enters data of his/her card through a suitable user interface of a payment platform, which can be generated by a specifically developed application. In other words, in the latter case, as will be detailed below, the processing unit C can be configured to create a user interface (for example the interface of a payment portal), which is configured to allow the user to enter information which is useful for identifying his/her payment card. According to this last aspect, the commercial establishment therefore allows to purchase a specific service or a product through the web, through (online) digital electronic payment.

A memory unit (identified with the reference MEM) can further be associated with the processing unit C, which memory unit comprises operational instructions adapted to control the operation of said processing unit C, for example it can include the codes of the aforementioned application which allows its control and innovative operation.

It can immediately be noted that the present invention is not limited by the used particular hardware architecture. For example, the memory unit MEM can be integrated into the processing unit C as an integral part of a local and/or remote unit thereof, or it can be an external memory unit, for example on an external server operationally connected to the processing unit C, or a portion of local memory and a portion of remote memory (both integrated and external to the processing unit C) can also be provided, without thereby limiting the scope of the present invention.

In one embodiment, the memory unit MEM also includes a database (reference DB) structured to include data related to the structures (for example commercial establishments, existing booking platforms, etc.) linked to the system 10 and other useful information, to create, for example, payment data or information related to the users who use the system 10, without any limitation; said database DB can also be part of an external component in suitable electronic units (or it can be part of the processing unit C which includes it), the present invention is in no way limited by the adopted architecture.

As known in this technical field, there are also data reception/transmission means, identified with the reference TX, to send data from and receive data to the processing unit C, for example to user devices and to external accounts, as well as for any possible internal operational communication between components of said processing unit C; these means can be for example wireless means, without however being limited to the latter.

In general, according to embodiments of the present invention, the instructions stored in the memory unit MEM are able to cause the processing unit C to define, for the execution of the payment of the user, at least first payment data (which are indicated herein with the reference "Data1") related to the first amount Amount1 associated with the expense of the user; at the same time, second payment data are also defined (which are indicated herein with the reference "Data2") which are related to the second amount Amount2 that the user must pay (which can for example be related to a tax associated with the service, or related to a different service by another provider).

As indicated above, the payment of the user can physically take place at a commercial establishment, for example through a POS terminal or another computerized unit provided with a card reader (which, in the context of this description, can be or can comprise at least part of the processing unit C), or also, in other embodiments, remotely by a payment platform, executed by a server unit (or more generally by a remote computerized unit) comprising at least part of the processing unit C. In any case, the first payment data Data1 and the second payment data Data2 are created through the processing unit C, which are structured and managed in an innovative manner, as described below. In one embodiment, the payment data are created at the moment of the payment of the offered service(s), for example when the operator sets up the transaction by entering the amounts to be paid, but without being limited to this aspect. In general, the term "data" should be understood in a broad sense and comprises all the elements which electronically define the first amount and the second amount (as well as any additional amounts).

Advantageously according to the present invention, based on the created payment data, the processing unit C is able to automatically divide the total payment amount into the first amount Amount1 and the second amount Amount2 by separating the first payment data Data1 from the second payment data Data2, thus performing an innovative separation of the first amount Amount1 from the second amount Amount2 (and in general of the various amounts into which the payment is divided). Conveniently, the system 10 of the present invention is therefore able to create a filter that processes the payment of the user, with upstream splitting of the various amounts and ensuring an innovative management of the operational flows.

In other words, still referring to a non-limiting application example of the present invention, thanks to the specifically developed application program (which can be developed to manage the operation of the processor of a local unit - such as for example a POS terminal - or even of a remote unit, and which is configured to create, innovatively manage and forward the payment data to the competent persons), it is possible to perform a split of the amount to be paid substantially at the moment of the payment, so that it is then possible to automatically, simply and quickly make a payment of, for example, a tax (which is separate from the rest of the amount) into the coffers of the institution responsible for collecting it.

It should be noted that, although the present description refers to an example that provides the separation of a first amount Amount1 and a second amount Amount2 (such as for example the tax associated therewith) with splitting into the first payment data Data1 and second payment data Data2, it is possible to imagine cases in which the total amount is divided into more than two amounts, with division also into third payment data (for example to be sent to a third account), fourth payment data (for example to be sent to a fourth account), and so on, for example in the case of payments to multiple providers, and therefore not only in cases of an amount that includes the related tax, the present invention being in fact applicable to any type of split payment that provides more than one amount.

In a non-limiting embodiment, the processing unit C is configured to initially create a single set of payment data (generally indicated herein as "Data") related to the total amount associated with the expense of the user, said payment data Data comprising the first payment data Data1 and the second payment data Data2 (or at least data elements that are then used to create said first and second payment data Data1 and Data2), i.e. said data are specifically created by the processing unit C at the moment of the payment, by aggregating different information into a data set that said processing unit C is able to innovatively manage. Once the overall payment data Data is prepared, the transaction is started (preferably a single transaction for the user) and the processing unit C is suitably configured to divide the total payment amount based on said data (i.e. dividing said payment data Data into the first data Data1 and the second data Data2), such that the first amount Amount 1 is separated from the second amount Amount2, as illustrated above. It can however be noted that this aspect is not limiting the scope of the present invention.

As mentioned above, in one embodiment, the processing unit C is configured to create a single payment request in fiat currency for the user with a single amount comprising the first amount Amount1 and the second amount Amount2 (and more generally all the various amounts that form the total amount), the payment data being therefore structured so as to include identifying information of said first amount Amount 1 and said second amount Amount2, said amounts being included in the payment data Data, and, after the single transaction has been started, the total amount is automatically split, separating the first payment data Data1 from the second payment data Data2.

More particularly, the payment data Data is organized by the processing unit C in an suitable way (for example in a data array), creating different sections, for example with a first section including data values related to the first payment data Data1 and a second section including data values related to the second payment data Data2, and so on.

By way of example, the data can comprise identifying information of the payment card of the user, the payment amount, and the commercial establishment and any other useful information such as, for example, time information and the like. Information related to, for example, a hotel facility and the amount to be paid to the institution can then be saved (for example in the database DB), as well as any additional information condensed with specific forms filled by the users at a different time and place.

From a technical point of view, in a non-limiting example of implementation, this data separation occurs by separating the amounts through the processing unit C which executes portions of code to divide the payment data Data into the first payment data Data1 and the second payment data Data2, which are then automatically managed separately from each other. In one example, the payment data are then first created and prepared by the processing unit C, said data being used to enable the transaction of the user, and are then separated into the first portion and the second portion to make two different payment orders, which are separately managed, in the modes that will be described below.

It can further be noted that, in a non-limiting embodiment, the processing unit C is configured to request the authorization to the user and/or the operator to accept the split payment.

Once the payment data with the aforementioned amount division has innovatively been created and divided, the processing unit C is then configured to send transaction data through data flows (i.e. the data related to the payment of the user, which, in some embodiments, can correspond to the first and second data Data1 and Data2 or data linked thereto) to make a first and a second payment order to different accounts (accounts). Before making the payment to the various accounts, the present invention provides an innovative intermediate step, as will be detailed below.

In particular, very advantageously according to the present invention, the technology developed in relation to cryptocurrencies is used to greatly simplify the management of flows and the execution of the various payments.

The processing unit C is in particular suitably configured to convert the fiat currency of the first amount Amount1 and the second amount Amount2 (and in general of all the involved amounts) into cryptocurrency, such as Ether or Bitcoin. In order to perform this conversion operation, the processing unit C can comprise a specific intermediate conversion unit (not illustrated), which includes software instructions which, when executed by its processor, allow the conversion and facilitate the management of the currency that will then be used in the payment network and is linked to one or more electronic wallets as described below, although this is in no way limiting the scope of the present invention and any hardware/software configuration that performs the aforementioned function can be adopted.

In particular, the first amount Amount1 and the second amount Amount2 converted into cryptocurrency are transferred to a respective wallet (indicated with the reference W) associated with a blockchain network (indicated herein with the reference BN, wherein the term blockchain and blockchain network can be used interchangeably). In other words, in this step, a first transaction is performed through cryptocurrency.

In the context of the present invention and as known in the field, the term wallet generally refers to an electronic system for secure access to cryptocurrencies managed through blockchain and is associated with the operator and/or the institution which receives the payment from the user (as well as there can also be a wallet associated with the user). Essentially, the wallet W is that element which holds the keys for the access to the cryptocurrency that is involved in the transaction; by extension, the term wallet is therefore also used to indicate the system in which the cryptocurrency is transferred, without limiting the scope of the present invention.

In one embodiment, the first and second amounts can be associated with different types of wallets (and therefore there can be a first wallet and a second wallet) or the same type of wallet can be associated therewith (and therefore there can be a first hardware/software portion, which stores the keys for a first user, and a second hardware/software portion, which stores the keys for a second user), without any limitation of the scope of the present invention. The expression "related wallet" therefore indicates, generally speaking, that the cryptocurrency into which the first amount Amount1 has been converted is associated with a wallet that contains the keys for the management of said cryptocurrency, as well as the cryptocurrency into which the second amount Amount2 has been converted is associated with a wallet that can be the same (for example managed by the platform) or different and that contains the keys for the management of said cryptocurrency.

As known in the field, the term blockchain indicates a distributed ledger for managing cryptocurrency transactions, said ledger comprising a plurality of blocks. The processing unit C of the system 10 of the present invention is able to interface with the blockchain network BN, which is able to process and record a transaction as part of a block thereof. Once a block has been completed, it is added to the blockchain and the ledger is updated. Said blockchain network BN is then configured to manage the cryptocurrency through which the transaction is made and is distributed on various nodes, wherein each node can be a computerized system (such as the processing unit C) which is configured to perform the functions related to the processing and management of said blockchain, such as verifying transactions, generating new blocks, validating blocks and maintaining a copy of said blockchain, to name just a few non-limiting examples. Each block of the blockchain is made up of a header (which includes, for example, a timestamp and reference values) and one or more data.

In one embodiment, the blockchain network BN can then be understood as part of the system 10, contributing to solving the technical problem of the present invention.

Thus, advantageously according to the present invention, the processing unit C is configured to interface with the blockchain network BN, which is structured to manage the cryptocurrency into which the fiat currency of the first amount Amount 1 and the second amount Amount2 has been converted.

In one embodiment, the blockchain network BN is an Ethereum network, but this invention is not limited to this aspect.

The wallet W is therefore a further element that is integrated into the system 10 and is configured to receive the split data flows (i.e. to receive the various cryptocurrency payments), in particular providing access to the blockchain network BN in which said transaction is recorded. As known, the wallet W includes a private key (which is part of a pair of cryptographic keys) which is used to generate digital signatures which serve as authorization, wherein said digital signature is verified by the blockchain network BN using the public key of said pair of keys; the wallet W can therefore refer to the key (or to the software/platform that manages it) or even, adopting different points of view, to the device that stores said key, without limiting the scope of the present invention.

It can also be noted that there can also be embodiments in which not all amounts are converted into cryptocurrencies, but some are sent, after splitting, to the related account by traditional flows; in this embodiment, what matters is that at least one amount is converted according to the process described above.

The processing unit C therefore comprises portions intended to receive a destination address associated with the wallet W, for example based on information/requests provided by the POS terminal at the operator (which can be a node of the blockchain network BN) and/or information provided by specific units, such as Exchange servers (which can also be understood as nodes of the blockchain network BN, as well as part of the processing unit C), so as to be able to correctly make the cryptocurrency transaction.

Conveniently, after the transfer to the wallet W, the cryptocurrency in said wallet W is converted back into fiat currency. It is therefore possible to transfer the converted currency to a first account (reference 13) through a first data flow F1 related to the payment of the first amount Amount1, in particular through direct transfer to said first account 13. Similarly, it is possible to transfer the converted currency to a second account (reference 14) other than the first account 13 through a second data flow F2 related to the payment of the second amount Amount2 separately from the first data flow F1, also in this case through direct transfer. The two or more split amounts are then reconverted and separately sent to the two or more different accounts through direct transfer.

Thus, the processing unit C is configured to transfer the converted currency of the first amount Amount 1 and the second amount Amount2 through direct transfers from the wallet W to the first account 13 and the second account 14, thus automatically making the payment of the divided amount in an extremely simplified and efficient way.

In order to ensure the stability and the security in transfers, the used cryptocurrency is a stablecoin, for example pegged to Euro or Dollar; this allows to obtain a protection against the volatility of cryptocurrencies.

To briefly sum up, according to the present invention, the traditional cards of the user are initially accepted (by starting a single transaction for example through the POS terminal), with real-time splitting that allows the automatic division of the upstream amount between multiple recipients and/or the upstream separation of any taxes or commissions, in order to then proceed with the conversion into cryptocurrency, in particular into a stablecoin, finally with a subsequent reconversion into fiat currency for the recipients of the payment through direct transfer.

The integrated wallet W (which operators can access) and the blockchain function with which the system 10 is provided therefore allows to simply and innovatively solve the technical problem of the present invention, said wallet W essentially acting as an intermediate account with also the possibility of direct management of funds and complete traceability of transactions through blockchain technology (which is a totally transparent ledger). All this provides high security and sustainability, wherein data security is guaranteed by encrypted storage and management of the digital identities, with a decentralized backup with a distributed network to avoid downtime or data loss, as well as it is possible to comply with personal data protection regulations.

Furthermore, in one embodiment, a structured software code for the execution of a smart contract, which is then written/stored in said blockchain BN for its execution by means of the processing unit C, is associated with the blockchain network BN. This for example allows programmable payments based on predefined conditions, with automated agreements between customers and providers and dynamic conditions for example for refunds or payment changes.

The system 10 of the present invention is therefore structured to allow and process a multiple and multi-channel order (in particular both orders which include amounts and taxes associated therewith and various amounts to different providers), wherein the processing unit C allows the suitable sorting of the different payments to the various channels in the advantageous manner described above.

The above-described architecture of the system 10 can be implemented in various ways and, in general, the processing unit C comprises suitably programmed modules and relies on hardware/software tools to obtain the described functions.

For example, the processing unit C comprises in memory a plurality of APIs (acronym for "Application Programming Interface") configured to be called and executed by said processing unit C for the execution of its functions (such as for example APIs for executing payments), for example Alchemy or Infura for connecting and interfacing with the blockchain network BN. Further, the wallet W can be managed through MetaMask.

There can therefore be various tools for configuring the system 10, as well as it is possible to proceed with the generation of keys and the configuration of the various digital accounts on Ethereum network (for example using testnet, with which real transactions can be tested, and using Etherscan to trace transactions). The development of the smart contract can for example take place through Remix Ethereum, which is used to write and test the contract (wherein the test can for example take place on Goerli network), without limiting the scope of the present invention.

In one embodiment, it is possible to accumulate a plurality of amounts in the wallets W and then make, for example on a daily basis, a single payment with direct transfer to the destination accounts.

Conveniently, the processing unit C is furthermore configured to automatically perform a tax reporting. The system 10 of the present invention therefore also allows a regulatory compliance, with automatic tax reconciliation and tax reports generated in real time.

To sum up, the system 10 of the present invention therefore allows to innovatively manage payment flows to two or more different accounts, in which the processing unit C recognizes the payment information of the user, separates the various amounts upstream through its splitting engine, automatically forwards the related amounts to different accounts, performing the conversion of traditional currencies into cryptocurrencies and vice versa and integrating the centrally managed wallet W (with interaction with the blockchain network BN), with possible issuance of automatic receipts for the user and for the commercial establishment.

As mentioned above, there can also be embodiments in which not all amounts are converted into cryptocurrencies, but some are sent, after splitting, to the related account through traditional flows.

Furthermore, in one embodiment, the processing unit C is configured to allow the selection between the mode in which there is no conversion into cryptocurrency (and the split amounts are transferred to the various accounts without conversion) and the one that provides the aforementioned conversion into cryptocurrency. For example, said selection can be requested at the moment of the transaction, or the most suitable mode can for example automatically be selected by the processing unit C based on the agreements stipulated by the various operators.

In general, as will be detailed below, these features can also be implemented by an artificial intelligence engine, although this is not strictly necessary.

Further aspects of the system 10 of the present invention will now be detailed, which can be implemented regardless of the aforementioned integration with wallets and blockchain network (and they are therefore innovative aspects that can be used with the splitting of the payment and transfer of the divided amounts both directly in fiat currency to the various accounts and with the aforementioned conversion).

As mentioned above, advantageously, if a booking of a user involves different providers of a service, the processing unit C is very advantageously configured to flexibly divide the total amount into a plurality of amounts, each of said amounts being related to a specific provider among said different providers, automatically transferring, through a single transaction made by the user, the different split amounts to separate accounts of the respective providers, thus managing multiple payments at the same time.

Thus, the present invention also refers to a system for making payments, comprising at least one processing unit configured to recognize payment information in relation to a user, to define at least first data (Data1) related to the first amount (Amount1) and second data (Data2) related to the second amount (Amount2), to separate the first data (Data1) from the second data (Data2) so as to divide the amount into said first amount (Amount1) and said second amount (Amount2), and to automatically forward the split amounts to the various accounts, wherein, if a booking involves different providers of a service, the processing unit can be configured to divide the total amount into a plurality of amounts, each of said amounts being related to a specific provider among said different providers, automatically transferring, through a single transaction made by the user, the different split amounts to separate accounts of the respective providers, thus managing multiple payments at the same time.

In other words, according to the present invention, a unified payment request is created for multiple providers, with real-time payment splitting and automatic division of the amount among multiple recipients.

Furthermore, in an embodiment of the present invention, the processing unit C is configured to suggest customized offers or multi-activity packages based on historical user data and/or the preferences of said user. Said offers can be shown in various ways, for example they can be shown to a hotelier based on the profile of the user, or directly to the user through a specific user interface, as will be specified later.

Through the present invention, it is therefore possible to define and establish different conventions a priori (also including conventions with the wallets), said conventions therefore defining the specific configurations of the processing unit C.

In one embodiment, when the second amount Amount2 is a certain tax (such as the tourist tax), it is automatically calculated by the processing unit C, although there can be cases in which it is manually entered. Further, for example in the case of the tourist tax (but in general also in the case of other taxes), the tax to be paid can vary based on various factors such as the season, the location, the type of accommodation, etc.; the processing unit C can then be programmed to dynamically adapt to these variations, always ensuring the correct collection.

As anticipated above, in an embodiment of the present invention (illustrated in figure 1), the processing unit C comprises a local unit at the commercial establishment (for example a POS terminal), in turn including reading means of payment means of a user, wherein said POS terminal or said local unit is configured to start a transaction when said reading means recognize the payment means of the user, thus allowing the payment with debit/credit card. The local unit (indicated herein with the reference Cl) is therefore configured to generate a transaction request and send data through a payment network, for example to remote server units. The application of the present invention can therefore be an additional application to the software present in said POS terminals/local units Cl, which is able to provide various additional services (such as for example the splitting of the amounts and the transformation thereof into cryptocurrency), allowing the payment to be split and the various amounts to be forwarded to multiple recipients without having to make different transactions. Said local unit Cl can send data to a remote unit for payment execution or it can be programmed to perform the aforementioned functions (including splitting and/or conversion into cryptocurrency, wherein there can also be a remote support unit, for example for managing the blockchain BN).

Embodiments are possible in which the processing unit C does not necessarily comprise a POS terminal. In fact, the application in question can also be executed on other apparatuses such as, for example, smartphones, tablets, personal computers and the like at commercial establishments, said apparatuses being able to be in operational communication with a remote server that executes steps according to the present invention, or they can execute all the necessary steps, in other words, devices such as smart POS or even smartphones/tablets/computers specifically programmed and provided with means to recognize a payment card of a user can be used.

By way of example, the application specifically developed to manage the operation of the processing unit C can be an application which, according to the POS terminal type in use, is developed in HTML5 or PHP, without however being limited by a particular language or in general by a particular architecture/implementation mode.

The embodiment of figure 1 therefore provides for the presence of local units Cl, such as POS terminals, and possibly also the presence of remote units (identified herein with the reference Cr), such as for example server units, with which they are in operational communication.

If a remote unit Cr in operational communication with the POS terminal/local unit Cl (which is provided with a specifically programmed processor and represents the local portion of the processing unit C) is present, the former can comprise various modules for the execution of various functions. The remote unit Cr can be configured to perform the separation of the first amount Amount1 from the second amount Amount2 and the conversion into cryptocurrency, as well as it can be configured to interact with the blockchain network BN for the transfer of amounts into the respective wallet W associated with various operators. For example, the remote unit Cr can be programmed to make, upon request of the POS terminal, a transaction on a node of the blockchain network BN (and it can correspond to a node of said blockchain network BN). In one embodiment, said remote unit Cr is furthermore configured to interact with other remote units, such as for example Exchange servers (not illustrated in the figures) for the execution of the transaction and crediting of the cryptocurrencies.

In general, the architecture of the system 10 is therefore varied and not limited to one in particular, with various functional modules that interact with each other. For example, as will be detailed later, there can be a module for the execution of an AI agent and for the execution of voice payments (in particular for the management of the requests through natural language), there can be an engine for the automatic division of the payments (splitting engine), a module for the management of wallets (multi-currency wallets) for example for the integration with stablecoins, a module for the management of the smart contracts and for the interface with the blockchain network BN which provides a transparent and secure register of the transactions, a currency conversion module (for example based on one or more Exchange servers) to allow the management of the immediate exchange between credit cards, cryptocurrencies and fiat transfers (these three modules can possibly be understood as part of an intermediate unit), as well as a compliance reporting module for example for the generation of automated tax reports and more generally for the regulatory compliance. Said modules can suitably be programmed, can be used and can interact with each other for example through APIs, and, in general, they can all be considered as being part of the processing unit C.

It can however be noted that the present invention is not limited by the specific configuration, wherein, in an embodiment, the processing unit C can be understood as a processing server that receives, from the POS terminal (which can be understood as a local portion thereof), the authorization requests to proceed with the payment and to perform the splitting of the amount in the mode indicated above; this processing server can be arranged to communicate with other units that can be understood as part of the system 10, such as for example the nodes of the blockchain network BN and one or more possible Exchange servers for the management of the cryptocurrencies and the wallets W, and which communicates with the processing server for sending said information to make the transaction in the most correct way (said Exchange servers can for example contain information about the blockchain BN).

Furthermore, as illustrated in figure 2, in addition or in combination with what has been seen above, the transaction does not take place through a POS terminal at a commercial establishment but takes place online, and it is therefore a digital payment. In this case, the processing unit C comprises at least one remote unit Cr which is accessible by a specific application or through a specific internet address, for example by means of a user device (reference 20) on which said application is installed. The remote unit Cr (which receives the order from the user device 20) is dedicated to processing data and performing the main operational steps, for example including the flow management and the integration of the splitting engine. The processing unit C can in this case comprise one or more web servers which are accessible online by the user devices 20 to make bookings and payments, without however being limited to a particular architecture. This embodiment is therefore developed to allow the user to remotely make online payments by his/her user device 20, with which he/she can access an innovative payment platform (indicated with the reference P and detailed below) for example by executing an application (for example, but not necessarily, peer-to-peer) which is installable on said user device 20. In this embodiment, the processing unit C therefore also acts as a payment gateway (or, to this end, it integrates specific units integrated into the payment platform through APIs and/or pre-integrated plugins), receiving and securely forwarding payment data of the users.

In this case, it is possible to develop a platform that stores the data of the user and provides means to recognize said user in a simple and secure manner (for example through QR code or more generally with a unique code with which the user is recognized before proceeding with the split payment).

The wallet W can therefore be provided to the operators to collect the related amount both through POS terminal and through remote app, with the possible provision and access to an own wallet also for the various users of the service.

In other words, in this embodiment of Figure 2, the processing unit C comprises at least one remote unit Cr, for example a centralized cloud unit, which comprises instructions which, when executed, allow generating the platform P which is accessible by a specific application or through a specific internet address from the user device 20. As will be detailed below, the platform P comprises a user interface UI generated by the processing unit C through which the user device 20 interacts and makes online electronic payments.

In a non-limiting embodiment, the user interface UI is created through Flutter or React.js.

It can also be noted that it is possible to create a user interface even in the case of local units, said user interface being for example shown on the POS terminal.

The platform P includes remote back-end components for executing its functions and front-end components with which the user interacts, wherein the access to said user interface UI occurs through execution of the aforementioned application which is installable on the user device 20.

The processing unit C therefore comprises means and instructions adapted to generate the user interface UI, which is configured to allow the user to access the platform P generated through said system 10 and to interact therewith, for example to make online bookings and/or payments.

In general, as will be detailed below, it is also possible to establish a network of affiliated commercial establishments for supplying goods/services associated/related to the main service, for example to the stay of the user, said network relying on the platform P and being manageable by specific structures, thus defining innovative functions of the platform P (which therefore also allows multiple bookings).

In particular, it is also possible to combine different services (for example services added to a first service, such as for example an overnight stay) in a single booking and above all with a single payment, facilitating the split payment for the various service providers (as will be detailed below), which automatically occurs starting from a single transaction for the user managed by the processing unit C. This can be done, at the user's request, through the operator who has access to these functions (to this network) through the local unit Cr, or even directly by the user through his/her own user device 20.

In general, as mentioned above and as illustrated in figure 3, combined embodiments are also possible in which the system 10 is a distributed system comprising various local units Cl, such as for example various POS terminals (or in general electronic devices) at various commercial establishments, and one or more remote units Cr which, on the one hand, communicate and receive data from the POS terminals (which have a suitably programmed processor and therefore represent the local portions Cr of said processing unit C) and, on the other hand, are configured to allow online electronic payments of the users who interact therewith through the devices 20, and also generally allow the management of the system 10. As seen above, online payments can take place for example through applications installed on the user devices 20 which communicate with the processing unit C (in particular with its remote portion Cr). In this case, there are therefore various processing units C (various portions thereof), i.e. various local units Cl (such as POS terminals or other specifically configured electronic devices) and one or more remote units Cr which communicate therewith and with the user devices 20 for the execution of the functions of the invention.

In one embodiment, the at least one remote unit Cr, which represents the core of the system 10, is dedicated to a centralized management of said system 10 and can be managed by specific structures (such as for example specific institutes), without however limiting the scope of the present invention. In one embodiment, the at least one remote unit Cr is a centralized cloud unit configured to centralize the management of the data flows, and is therefore a globally scalable central unit. In other words, in this case, the term processing unit C indicates various electronic devices which are suitably configured, in particular comprising local portions Cl such as POS terminals or other electronic devices and one or more remote portions Cr such as for example scalable cloud units.

In one embodiment of the present invention, the memory unit MEM of the processing unit C is configured to store the coordinates of the web services of the first account 13 and the second account 14, and more generally of the various accounts to which the respective amounts are destined. Thus, the processing unit C is configured to automatically set the coordinates of said web services for sending the data related to the first payment order to the first account 13 and the data related to the second payment order to the second account 14. In other words, in order to actually make the various transactions, for accessing the web services, the system 10 knows the related coordinates and uses them when requested.

According to further aspects of the system 10 of the present invention, advanced functions can be provided. For example, the system 10 can be configured to communicate with IoT devices configured to monitor said system 10, for example to monitor consumption, manage inventories and maintenance requests in real time.

Till now, general innovative aspects and some architecture examples of the system 10 according to the present invention have been described, while the next paragraphs will detail some further innovative aspects implemented thereby.

### Integration with artificial intelligence

Using the technology in the field of artificial intelligence (shortened to AI), it is possible to introduce, into the system 10, advanced automation features, payment flow optimization, and optimized integration with booking systems for multiple commercial activities, to name some advantageous aspects.

In particular, advantageously according to the present invention, the processing unit C comprises an artificial intelligence engine (or artificial intelligence module or unit and referred herein to by the reference Ci) programmed to perform various advantageous functions.

More specifically, in one embodiment, the artificial intelligence engine Ci is programmed to transform inputs of a user (generally a digital input) into instructions that can automatically be executed by said processing unit C for the execution of the payments to the first account 13 and the second account 14 (and more generally to the various accounts intended to receive the respective amounts), said artificial intelligence engine Ci being executable in any context that requires the division of a payment, so as to manage the system 10 in the most optimal way both from the user side and from the operator side.

It can be noted that, in the context of the present invention, the term artificial intelligence is used to generally indicate a computerized system suitably programmed, preferably but not necessarily, with machine learning techniques, although, in some applications, artificial intelligence engines trained by machine learning techniques can be provided (in the latter case, the artificial intelligence engine Ci is based on an artificial intelligence model without being limited to a particular model).

In one embodiment, the artificial intelligence engine Ci is an AI agent, without being limited to a particular type. AI agents are systems or programs that can autonomously perform specific tasks on behalf of a user who gives them suitable commands by various tools (for example, voice commands). By processing the language of the user, the AI agents are able to perform various functions using advanced natural language processing techniques (for example, Large Language models - LLMs) in order to understand and respond to the inputs of the user.

Very advantageously, as mentioned, the inputs of the user can be voice commands, thereby greatly simplifying the entire process performed by the system 10. For the users of the system 10, it is therefore enough to give a voice command into a microphone (for example associated with the POS terminal or a device such as a smartphone or tablet) in order to make the payment, with automatic data processing and with the automatic separation of the various amounts. As will be detailed below, in one embodiment, it can also be possible to make bookings for the user by voice command, through interaction with the platform P.

In other words, the processing unit C is configured to allow an automatic payment management (including the division of the various amounts) following a simple request, for example following a voice command of the user (or more generally following a trivial insertion of a request through a specific user interface); this is optimized and automated thanks to the artificial intelligence engine Ci, which autonomously and optimisedly performs operations following the request of the user. On the operator side, it is therefore possible to make the desired payment (for example, provide the transaction, even for multiple services) only with a voice command and, on the user side, in addition to the aforementioned payment, it is also possible to search for a desired service or in general to make a booking (through a simple input such as a voice command or a simple keyboard entry), with the subsequent split payment.

At the operational architecture level of the system 10, there is therefore a hardware/software module for managing the inputs of the user in order to implement the aforementioned AI agent in the form of a voice assistant for making payments as well as for searching and selecting products/services, all with a single command with which the user can book or purchase products and services in a single transaction.

The processing unit 10 is therefore suitably configured to allow an integration through voice, web and apps and multi-channel payment management, wherein the AI agent is programmed to collect and structure multiple order data. To this end, platforms such as Google Dialogflow or Amazon Lex can be used, without limiting the scope of the present invention. Further, the development of the AI agent backend can be performed with tools such as Node.js or Python (Flask/Django). One or more voice APIs can then be used, wherein the tests can be performed through Postman (for example to verify API calls).

An AI agent is therefore very advantageously obtained, which AI agent accepts orders and generates payment requests, as described above, and then automatically performs the division of the various amounts.

It can be noted that the presence of the artificial intelligence engine, in particular of the AI agent, is a general aspect of the system 10 of the present invention and it can therefore be implemented even without the aforementioned conversion into cryptocurrency and the use of the blockchain; in other words, the present invention also provides a system which integrates an artificial intelligence engine which allows to process, starting from the input of a user (in particular a voice command processed through AI agent), a multiple order and to divide the payment in the various directions; this can occur through POS terminal or also through a (also, but not necessarily, peer-to-peer) specific app installed on the user device 20, having as output the split payment to the various destination accounts.

In other words, the present invention also refers to a system for making payments, comprising at least one processing unit configured to recognize payment information in relation to a user, define at least first data (Data1) related to the first amount (Amount1) and second data (Data2) related to the second amount (Amount2), separate the first data (Data1) from the second data (Data2) so as to divide the amount into said first amount (Amount1) and said second amount (Amount2), and automatically forward the postponed amounts to the various accounts, wherein the processing unit comprises an artificial intelligence engine programmed to transform inputs from a user into instructions that can be automatically executed by said processing unit to make payments to the first account and the second account. For example, the artificial intelligence engine can be an AI agent and the input of the user can be a voice command.

If this aspect is implemented together with the use of the cryptocurrency, the integration of the AI agent with splitting processes and its connection with the backend and the blockchain could lead to a synergistic effect and to many advantages.

Furthermore, thanks to the artificial intelligence engine Ci, it is possible to optimize in real time and extend the function of the system 10, for example by acting on flows or payment data.

In one embodiment, the artificial intelligence engine Ci is trained to optimize currency transfers and data flows in real time. This optimization through the artificial intelligence engine Ci for example allows to identify in real time (and possibly select) one or more payment methods that are more advantageous for the user and/or for the operator, for example by automatically choosing the best account and/or the most advantageous channels for the different financial flows based on parameters such as exchange rates or commissions, or even based on the user's preferences, thereby optimizing the payment process in a way that is advantageous for everyone.

Furthermore, in addition to optimizing the flows as described above, in an application example, the artificial intelligence engine Ci can be trained to monitor in real time the currency transfers and said data flows so that, based on said monitoring, it is possible to identify anomalous or potentially fraudulent behaviors. There is therefore a real-time monitoring of payment behaviors, with the technical advantage of increasing the security for the user and the operator.

In other words, to sum up the above, it is possible to obtain a new management and an optimization of the payment process, in which the artificial intelligence engine Ci is particularly used to optimize the division of the amounts in real time, identifying the most advantageous payment methods for the user and for the commercial establishments, as well as it can be used for the detection of anomalies and prevention of fraud, allowing a proactive management of payment security, as well as for many other advantageous features.

In one embodiment, as mentioned above, the artificial intelligence engine Ci can furthermore be used to suggest customized offers or multi-activity packages based on historical user data and/or the preferences of said user, providing an increasingly customized experience. In other words, there is the advantageous possibility of predicting the user's choices by processing his/her preferences over time, suggesting tailored offers or related service packages, therefore introducing an intelligent and dynamic interaction between the user and the system 10.

Advanced features are therefore possible, such as for example predictive analytics through predictive algorithms to suggest purchasing packages based on the behavior of the user, as well as to perform a customized reporting for companies and operators.

In one embodiment, as mentioned above, the artificial intelligence engine Ci can furthermore be used to further optimize and automate the tax reporting, making it easier to compile and submit financial and tax reports directly to authorities, said operation occurring in an automatic and optimized manner, further reducing human intervention.

Furthermore, the artificial intelligence engine Ci can be configured to dynamically manage the availability of the activities and/or services which can be booked by the user and to optimize the flow of different bookings, for example avoiding booking conflicts or overbooking and facilitating the payment through the centralized system.

In addition, there is the advantageous possibility of adapting the system to various payment contexts in the best way, not only for the hotel sector but also for restaurants, health services, transport, e-commerce, allowing to obtain a universal payment management system.

### Further developments of the system of the invention and multi-activity platform

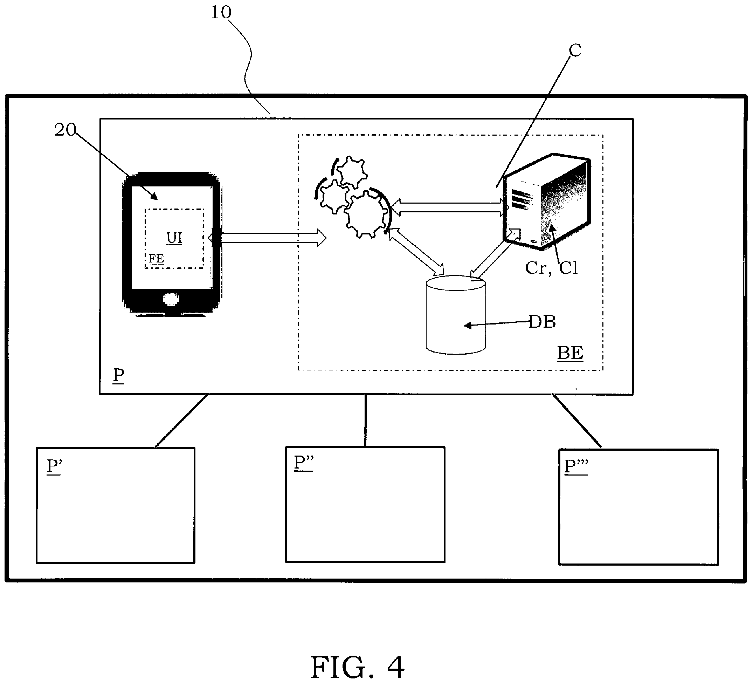

As anticipated above, advantageously according to the present invention, regardless of the presence of the aforementioned artificial intelligence engine Ci, the system 10 is configured to define an innovative payment platform, identified herein with the reference P. It can be noted that, in the context of the present invention, the term "payment platform" is to be understood in a broad sense and comprises hardware and software elements of the system 10 which contribute to its generation and in general to the embodiment of the invention, as outlined in figure 4.

As mentioned above, the processing unit C comprises instructions adapted to generate the user interface UI configured to allow the user to access and interact with the platform P of the invention generated through the system 10.

Suitably, in one embodiment, the platform P is configured to make multiple bookings and the processing unit C is further configured to allow the separation of the first amount Amount1 from the second amount Amount2 (and more generally the separation between the various amounts, which can also be more than two) for each booking made by the user through said platform P.

The platform P integrates different functions and can be extended to different payment contexts, all in an efficient and dynamic way.

In other words, the aforementioned P can be generated by the system 10 through hardware and software components, which can therefore be understood as an innovative platform, for example dynamically integrable as described above, i.e. a hardware and software infrastructure that provides, to the user, services, tools and applications for making use of innovative digital contents and services, including the innovative management of the payments through cryptocurrencies as described above.

The processing unit C is therefore configured to allow online electronic payments through access to the platform P by the user through the user interface UI, as well as by the operator by his/her local unit Cl on behalf of the customer. For example, as anticipated above, the access to the user interface UI can occur through the execution of an application installable on the user device 20, which is programmed to allow bookings and to automatically allow the execution of the aforementioned splitting.

The platform P developed according to the present invention therefore comprises a first front-end component FE, which allows the user/operator to interact through the user interface UI, and a back-end component BE, i.e. the set of (also remote) components which allow the execution of its functions and the effective operation of the system 10 (and therefore of the platform P) and with which the user interacts through the aforementioned front-end component FE. In other words, according to embodiments of the present invention, the stored program instructions are therefore executed by means of the back-end processing unit C (which can provide various hardware/software modules which interact with each other) with which the user interacts through the user interface UI, which represents the front-end of the platform P.

Advantageously, the aforementioned user interface UI is unique and is the same for all bookings that can be made by the user/operator though the platform P.

In one embodiment, the platform P provides the automated search for the various services requested by the user, in the most varied sectors.

In another non-limiting embodiment, the platform P can be integrated with a plurality of different existing booking platforms (i.e. platforms which are already developed and available, represented as P'-P‴ in figure 4), each being related to a booking that can be made by the user, and the processing unit C is programmed to allow the automatic separation of the first amount Amount1 from the second amount Amount2 for each booking made by the user, who has accessed said payment platform P' through the user interface UI with which he/she has interacted and with which he/she is also able to access the other integrated platforms. Thus, multiple bookings are possible, even simultaneously, thus unifying the management of the bookings and payments for multiple services/activities within a single interface.

Furthermore, the system 10 can be structured to be integrated into existing platforms, providing them (which therefore rely on said system 10) with the tools for dividing the payment.

Alternatively, as mentioned above, there can be embodiments in which the multi-activity management is obtained by specific agreements with a network of various commercial activities joining the platform P (without necessarily integrating existing platforms), without limiting the scope of the present invention, wherein the accounts of said activities associated with the network of the platform P are represented in figure 4 still with the references P'-P"', said network can for example also be managed by the operators.

In general, the system 10 therefore allows a digital booking of multiple activities (for example through integration with various digital booking platforms for different commercial activities or by creating a network of various activities), thus unifying the management of the bookings and payments for multiple services within a single interface. The system 10 can therefore also allow the booking of services such as hotels, restaurants, tourist experiences, car rentals, etc., without limiting the scope of the present invention, with automated payment division also for these multiple bookings, directing the funds to the different accounts of the involved activities. This can be done by the user, for example through the user interface UI, but, as seen above, also by the operator (for example a hotelier) who has the possibility of providing this service to the customer, proceeding with multiple bookings and, starting from a single transaction, with the automatic splitting for the various involved activities, even following a voice command.

In one embodiment of the present invention, the integration of all these functions of the platform P is achieved through one or more APIs, in particular executed by the processing unit C.

As mentioned, the platform P can be able to store the data of the user and, in the case of online digital payments, provides means to easily and securely recognize said user (for example through QR code, or in general by generating unique codes for each payment with which the user is recognized and which guarantees the security of the transaction), before proceeding with the split payment. Through the access to the platform P, it is therefore possible to access the data of the user (personal and also payment data, such as for example wallet data, which are securely stored), from which the payment to the various different accounts can then be arranged. In one embodiment, once the user has been certified (through various protocols), the platform can ask the user to accept the split payment to different accounts; the various information can then be exchanged with the various subjects - for example providers - joining the platform P (for example, unique codes can be exchanged between user and provider, while, if cryptocurrencies are used, the security is guaranteed by the blockchain BN).

As mentioned above, the processing unit C can also comprise a centralized cloud unit configured to centralize the management of data flows, and therefore a globally scalable central unit, with which it is possible to centrally manage the platform P. In other words, there can be a scalable and centralized cloud architecture for a centralized and scalable management of the financial flows, expanding the possibilities of internationally using the system 10, with flexibility and the ability to adapt to different markets.

It is therefore possible to simultaneously manage bookings and payments from multiple commercial activities through the processing unit C, for example through the aforementioned centralized cloud unit, in particular through the platform P, providing a universal solution for different sectors.

Furthermore, as mentioned above, very advantageously according to the present invention, if a booking involves different providers of a service (as it can happen in the case of multiple bookings, for example made through the platform P by the user but possibly also by the operator), the processing unit C is configured to flexibly divide the total amount into a plurality of amounts, each of said amounts being related to a specific provider among said different providers, automatically transferring, through a single transaction made by the user, the different split amounts to separate accounts of the respective providers, managing multiple payments at the same time. This function can be integrated with the possibility of converting the amounts into cryptocurrency and of relying on blockchain wallets, as described above.

In other words, very advantageously, the processing unit C is configured to perform a flexible division between multiple service providers, ensuring that different amounts are automatically and error-free transferred to separate accounts of different operators and/or institutions, all in a single transaction made by the user. This facilitates the payment, in particular in situations in which there are multiple involved subjects. It can also be noted that this is a general aspect of the system 10 of the present invention and it can in general be implemented even without the use of the conversion into cryptocurrency and of the blockchain; thus, the present invention also refers to a system that integrates the possibility of split payments between multiple providers, possibly with the aforementioned platform, as described above.

In this case, the platform P can therefore be developed to provide multiple services to the user (even simultaneously, for example services of commercial activities linked to said platform P), and therefore the processing unit C is configured to manage and allow the interaction with multiple activities, such as for example various types of bookings, with automatic management of the division of the payments for the various services and for the various possible providers (and for any taxes associated with said services), and also with the possibility of an automatic management of the (even multiple) bookings and all payments following a simple request of the user, for example following a voice command or following a simple insertion of a request through the suitable user interface UI. In other words, it is possible to perform an automatic management of the bookings (even multiple, with the possibility of selecting various desired services) and therefore also of the resulting payments (including the division of the various amounts) following a simple request of the user.

Conveniently, the possibility to simultaneously manage multiple commercial activities through the platform P, which is suitably structured and configured for this purpose, by automating the division of the payments between different providers, greatly expands the application of the system 10 and makes it innovative on a global level.

As anticipated above, specific structures can be created for the management of the system 10, for example a network of affiliated activities can be created for the supply of goods/services associated/related to the main service, i.e. the consumer's stay.

In one embodiment, the platform P can be reached by the user through a QR-Code, for example delivered at the check-in in a hotel, and, through said platform P, the user can have access to a listing of various services offered, for example, by local third parties; the processing unit C of the system 10 is suitably programmed to automatically carry out all charges, sending the money to the third parties, with splitting of the various amounts where required; in this sense, the operator can also manage said bookings and payments for example through the POS terminal or more generally the local unit Cl or with any other means, giving the user a single transaction request, wherein the various bookings made by him/her or by the user are automatically recorded by the processing unit C and the payment data are automatically divided.

In an exemplary embodiment, the operator can request that the transaction is made by direct bank transfer to his/her account on a daily basis, for example following a voice command, in particular through transfer from the wallet W to his/her account and to the other accounts involved in the transaction; in particular, once the authorization to make a transaction through the card of the user has been obtained, the operator can then be able to end the transaction also for any additional provided services, for example at the end of the day, distributing the various amounts to the various recipients.

In general, regardless of the implementation of the aforementioned artificial intelligence unit Ci, the processing unit C is suitably configured to perform an automatic management of the bookings (even multiple, thanks to the possibility of integrating various functions - for example various platforms - from which it is possible to select the various services) and therefore also of the resulting payments (including the division of the various amounts) following a simple request of the user, for example following a voice command or in general following the insertion of a request through the user interface UI. Thus, starting from the request of the user (or in some implementations also of the operator), said request is processed through the processing unit C, automatically providing a series of services and performing the bookings and related payments, all through the single user interface UI.

All this can furthermore be integrated with the AI agent to optimize the possibility of booking multiple services (for example based on a voice command), with a single transaction in which the amounts are divided upstream (for example between hotel, tourist tax, transport services, etc.).

### Applications of the system of the invention

As seen above, the applications of the system 10 of the present invention are various, with the possibility of automatically separating a tax (such as the tourist tax) from the amount associated with a specific service (such as an overnight stay in a hotel).

Among the various applications, mention should be made of the contribution that the present invention provides to health tourism, in particular health tourism which involves the movement of patients from some regions to other regions with more excellent health facilities and renowned spa facilities (often affiliated with the national health system).

Conveniently, the automatic payment division provides a different benefit depending on the category of users. On the one hand, there are people with diseases looking for excellent therapies, on the other hand, there are other people (such as for example spa tourists) looking for therapies for minor pathologies (typically otolaryngologic or musculoskeletal pathologies).

For the first catchment area, the possibility of paying in advance the hotel tourist tax, automatically and possibly online, together with the hotel, allows the patient to avoid exhausting waits (even if only a few minutes) for a seriously ill patient. It should in fact be remembered that not all therapies are carried out in hospitalization regime: many services are, in fact, carried out in day hospital.

Furthermore, said system 10, thanks to the innovative platform P and the possible creation of the related network of activities, furthermore allows to use many other advantageous services, such as for example ordering a takeaway in the hotel (possibly managed by the hotelier), with direct charging with a single transaction, without the need to make a separate account. In this way, it is possible to make a difficult life easier for people who would find it very difficult to leave their hotel room after heavy and stressful therapies, avoiding the burden of a separate booking.

For the second catchment area, the automatic division of the payments allows not only to save precious time, but also, for example by always using the aforementioned integrated platform P, to book further activities such as restaurants, museums and many other activities in a fast and simplified manner, and therefore to book activities that patients with less serious illnesses can easily do. This allows health tourists to make the most of their time, also leading to an indirect economic use of the health tourism locations they head to.

It can however be noted that the present invention can be applied in a variety of sectors, without limiting the scope of protection. For example, the invention is generally applicable to e-commerce, wherein the source splitting can simplify the collection of VAT or any local taxes directly at the moment of the purchase, or also to transport services, to the real estate market (with particular reference to short-term leases), streaming services and digital contents, as well as to the food and catering sector and others. In general, the system 10 can thus be applied not only in the hotel sector (also with the advantageous possibility of voice bookings for stays, meals and transport in a single transaction and immediate division of tourist taxes and payments to service providers), as well as in the restaurant and delivery sector (with multi-channel payment management for orders from multiple restaurants or providers and automated distribution of the commissions for the delivery platforms), for events and tourism services (for example with voice payments for event packages, transport and local activities and advance collection of applicable taxes or insurances).

### Summary considerations, advantages of the invention and conclusions

As widely discussed, the present invention very advantageously allows to make the payment of a specific service (such as, for example, the payment of an overnight stay at a hotel facility) and of a tax associated therewith (such as, for example, the tourist tax), or the payment of multiple services at the same time, through a single electronic payment system, for example comprising a POS terminal (or more generally a computerized system comprising one or more local and/or remote units), specifically programmed to divide the payment made by the user into two or more portions and to distribute said split payment to all the destination accounts.

Advantageously according to the present invention, an advanced payment splitting management system is provided, for example through AI Agent for voice payments (such as Alexa, Siri and similar voice AI agents) and multi-channel management (with voice, app and web integration), which greatly simplifies the transaction management.

If a AI voice agent is used, the multi-channel transactions can be greatly simplified with a single voice command.

Conveniently according to the present invention, the distribution of the payments is automated towards multiple recipients, bypassing traditional banking circuits thanks to the use of cryptocurrencies, for example stablecoins pegged to euro or dollar to ensure stability and security in transfers. Traditional currencies are in fact converted into cryptocurrencies and vice versa, integrating a centrally managed wallet.

Conveniently, thanks to the system of the present invention, it is no longer necessary to adapt to existing circuits (each having its own specific rules) and to rely on the bank acquirers, thanks to the simplified management through wallets (which eventually only requires the registration at companies which manage said wallets), wherein the final result is the crediting of fiat currency to one's account.

In an implementation form, the system of the present invention is therefore able to manage voice orders (integrating AI voice agents for orders and payments), to manage payment splitting and is also configured to use blockchain stablecoins, with the possibility of also providing smart contracts (these aspects can in any case also be implemented individually, as described above).

There is therefore a significant evolution in the sector of the digital payments thanks to the combination of artificial intelligence, blockchain transactions and stablecoins in order to provide an innovative, efficient and scalable solution. Thanks to the integration of voice assistants and to the decentralized payment management, the system of the present invention allows a smooth and secure user experience, redefining the concept of digital transaction.

As described in detail above, the system of the present invention can be adapted to various contexts and can be implemented in various ways, both on POS terminals (in particular specifically programmed smart POS) and through apps that can be easily downloaded and used by the user.

Further, the system of the present invention is globally scalable, with the possibility of adapting to different markets, thanks to its architecture described above.

To sum up, the system of the present invention provides many advantages, including operational efficiency, with reduced processing times, reduced commission costs thanks to the elimination of bank acquirers, advanced security thanks to blockchain and encryption for data and payment protection. It also guarantees a great payment flexibility, with simultaneous management of multiple currencies and cryptocurrencies, and global scalability (since the system is modular and can be applied in different markets and sectors).

Among the many advantages of this system, it can also be noted that the automation of the process significantly reduces the risk of human errors in the collection and payment of the taxes, ensuring that the right amount is always allocated to the tax institution, with transparency, speed and accuracy in the collection and distribution of various taxes associated with certain payments.

Furthermore, thanks to the system of the present invention, the manager of a commercial establishment no longer has to fill forms related to the tax to be paid and forward said forms to the relevant institution, with an enormous saving of time, since the system of the present invention automatically forwards the data which are necessary for said payment, as well as it automatically performs a tax reporting: the processing unit autonomously sends the necessary data based on the aforementioned payment data. All this, in addition to significantly simplifying the work of the managers, allows to fight the tax evasion, automatically guaranteeing the correct payment flows to the institutions that must collect the taxes. The automatic issuing of the receipt for the user and for the manager is a certain proof that the payment of the tax has been made, said payment being in fact made directly by the user, at the moment of the payment of the service, through the POS terminal (or also through app or more generally through electronic payment), with automatic sending of all data to the various involved accounts.

Furthermore, very conveniently, in the case of multiple providers/multiple bookings, the automatic separation of the collections towards the various predetermined recipients is also guaranteed, automatically routing and collecting the transaction to the various bank accounts or digital wallets.

In order to provide the present invention, it is possible to provide upstream agreements with the various institutions such as municipalities (as well as with the accounts of the hotel facilities and in general of the operators), providing the technology that allows the splitting of the payment, which occurs directly upstream.

The payment process is therefore significantly simplified, also requiring a single transaction by the user.

All the above advantages are achieved in a really simple way and without the need for complicated systems.

Conveniently, the integration of the system of the present invention with the artificial intelligence engine allows to further automate and improve the management of the payments, dynamically optimizing the payments and allowing a customization of the service.

There is also the possibility of extending the application of the system to a wide range of activities beyond the hotel sector, with a processing unit configured so as to make the payment platform adaptable to different business and payment contexts, allowing a great operational efficiency, improving the user experience and giving commercial establishment managers powerful tools for the automated management of the transactions and bookings. In addition to this versatility, there is also the possibility of managing multiple bookings: the possibility to simultaneously manage digital bookings for multiple services offered by multiple commercial activities through a single automatically split payment (and possibly with a single payment and booking interface) makes the system of the present invention even more versatile and even more easily applicable to various commercial contexts, while automating the division of the payments between different providers.

Further, the processing unit can be based on a scalable and centralized cloud architecture (therefore with a centralized and scalable management of the financial flows through cloud infrastructures), expanding the possibilities of using the system at an international level, with flexibility and the ability to adapt to different markets.

To conclude, the present invention allows to brilliantly solve the technical problem and to obtain the aforementioned advantages through the described system, for example through integration with artificial intelligence engines and use of cryptocurrencies for simplifying the process. From the above, it is furthermore evident that the present invention also refers to a related payment method for solving the technical problem, said method very advantageously providing the discussed operational steps.

Obviously, a person skilled in the art, in order to satisfy contingent and specific needs, can make various modifications and variations to the system and method described above, all of which are comprised within the scope of protection of the invention as defined by the attached claims.

## Claims

1. System (10) for making payments, comprising at least one processing unit (C) configured to:
- recognize payment information related to a user who uses a service with which an amount to be paid is associated, said amount comprising at least one first amount (Amount1) and one second amount (Amount2) in a fiat currency;
- define at least first data (Data1) related to the first amount (Amount1) and second data (Data2) related to the second amount (Amount2);
- separate the first data (Data1) from the second data (Data2) so as to divide the amount into said first amount (Amount1) and said second amount (Amount2);
- convert the fiat currency of the first amount (Amount1) and the second amount (Amount2) into cryptocurrency;
- transfer the first amount (Amount1) and the second amount (Amount2) converted into cryptocurrency to a wallet (W) associated with a blockchain network (BN);
- convert the cryptocurrency in said wallet (W) back into fiat currency; and
- transfer the converted currency, through a first data flow (F1) related to the payment of the first amount (Amount1), to a first account (13), and, through a second data flow (F2) related to the payment of the second amount (Amount2), to a second account (14) which is different from the first account (13).

2. System (10) according to claim 1, wherein the cryptocurrency is a stablecoin.

3. System (10) according to claim 1 or 2, wherein the processing unit (C) is configured to interface with the blockchain network (BN), which is structured to manage the cryptocurrency into which the fiat currency of the first amount (Amount1) and the second amount (Amount2) has been converted.

4. System (10) according to any one of the previous claims, wherein a structured code for executing a smart contract is associated with the blockchain network (BN).

5. System (10) according to any one of the previous claims, wherein the processing unit (C) is configured to transfer the converted currency of the first amount (Amount1) and the second amount (Amount2) through direct transfer from the wallet (W) to the first account (13) and the second account (14).

6. System (10) according to any one of the previous claims, wherein the processing unit (C) is configured to automatically perform a tax reporting.

7. System (10) according to any one of the previous claims, wherein the processing unit (C) comprises an artificial intelligence engine (Ci) programmed to transform input from a user into instructions which are automatically executable by said processing unit (C) for making payments to the first account (13) and the second account (14).

8. System (10) according to claim 7, wherein said artificial intelligence engine (Ci) is an AI agent, and wherein the input of the user is a voice command.

9. System (10) according to claim 7 or 8, wherein the artificial intelligence engine (Ci) is trained to perform at least one of:
- optimizing currency transfers and data flows in real time; and/or
- monitoring said currency transfers and data flows and, based on said monitoring, identifying anomalous or potentially fraudulent behaviors.

10. System (10) according to any one of the previous claims, wherein the processing unit (C) comprises instructions adapted to generate a user interface (UI) configured to allow the user to access and interact with a platform (P) generated through said system (10), said platform (P) being configured to perform multiple bookings, and wherein the processing unit (C) is further configured to allow the separation of the first amount (Amount1) from the second amount (Amount2) for each booking made by the user through said platform (P).

11. System (10) according to any one of the previous claims, wherein, if a booking involves different providers of a service, the processing unit (C) is configured to divide the total amount into a plurality of amounts, each of said amounts being related to a specific provider among said different providers, automatically transferring, through a single transaction made by the user, the different split amounts to separate accounts of the respective providers, thus managing multiple payments at the same time.

12. System (10) according to any one of the previous claims, wherein the processing unit (C) is configured to suggest personalized offers or multi-activity packages based on historical user data and/or preferences of said user.

13. System (10) according to any one of the previous claims, wherein the processing unit (C) also comprises a POS terminal or a local unit (Cl) at a commercial establishment, in turn including reading means for payment means of a user, wherein said POS terminal or said local unit (Cl) is configured to start a transaction when said reading means recognize the payment means of the user.

14. System (10) according to claim 13, comprising a remote unit (Cr) in operational communication with the POS unit/local unit (Cl), said remote unit (Cr) being configured to perform the separation of the first amount (Amount1) from the second amount (Amount2) and the conversion into cryptocurrency, as well as it is configured to interact with the blockchain network (BN) for transferring the amounts and managing the wallet (W).

15. System (10) according to claim 1, wherein the processing unit (C) comprises at least one remote unit (Cr), which comprises instructions which, when executed, allow generating a platform (P) which is accessible by a specific application or through a specific internet address from a user device (20), wherein said platform (P) comprises a user interface (UI) through which the user device (20) is able to interact and make online electronic payments.

16. System (10) according to any one of the previous claims, wherein the processing unit (C) comprises in memory a plurality of Application programing Interfaces (APIs) configured to be called and executed by said processing unit (C) for the execution of its functions, for example Alchemy or Infura for the connection with the blockchain network (BN), and/or wherein the wallet (W) is managed through MetaMask, and/or wherein the blockchain network (BN) is an Ethereum network.

17. Method of making payments, including the steps of:
- recognizing payment information related to a user who uses a service with which an amount to be paid is associated, said amount comprising at least one first amount (Amount1) and second amount (Amount2) in a fiat currency;
- defining at least first data (Data1) related to the first amount (Amount1) and second data (Data2) related to the second amount (Amount2);
- separating the first data (Data1) from the second data (Data2) so as to divide the amount into said first amount (Amount1) and said second amount (Amount2);
- converting the fiat currency of the first amount (Amount1) and the second amount (Amount2) into cryptocurrency;
- transferring the first amount (Amount1) and the second amount (Amount2) converted into cryptocurrency to a wallet (W) associated with a blockchain network (BN);
- converting the cryptocurrency in said wallet (W) back into fiat currency;
- transferring the converted currency, through a first data flow (F1) related to the payment of the first amount (Amount1), to a first account (13); and
- transferring the converted currency, through a second data flow (F2) related to the payment of the second amount (Amount2), to a second account (14) which is different from the first account (13).

18. Method according to claim 17, wherein the cryptocurrency is a stablecoin, wherein portions of code of a smart contract are associated with the blockchain network (BN), and wherein the transfer of the converted currency of the first amount (Amount1) and the second amount (Amount2) occurs through direct transfer from the wallet (W) to the first account (13) and the second account (14).
